# EUROPÄISCHE PATENTSCHRIFT

(11) **EP 2 476 685 B1**
(45) Veröffentlichungstag und Bekanntmachung des Hinweises auf die Patenterteilung: **02.08.2017**
(21) Anmeldenummer: 12150888.1
(22) Anmeldetag: 12.01.2012
(51) Int. Cl.: C07F 9/14, C07F 9/09

(54) **Verfahren zur Herstellung von Alkylphosphaten**
Method for manufacturing alkyl-phosphates
Procédé de fabrication de phosphates d'alkyle

(30) Priorität: 17.01.2011 EP 11151165
(43) Veröffentlichungstag der Anmeldung: 18.07.2012
(73) Patentinhaber: LANXESS Deutschland GmbH, 50569 Köln (DE)
(72) Erfinder: Hansel, Jan-Gerd, 51469 Bergisch Gladbach (DE)

(56) Entgegenhaltungen:
- DE-A1- 2 625 878
- Theodor Wieland ET AL: "Ausschütteln" In: "Gattermann - Wieland Die Praxis des organischen Chemikers", 1 January 1982 (1982-01-01), Walter de Gruyter Berlin New York 1982, XP055218003, ISBN: 978-3-11-006654-8 pages 61-62,

## Beschreibung

Die vorliegende Erfindung betrifft ein Verfahren zur Herstellung von vollständig wasserlöslichen Tetraalkylbisphosphaten durch Umsetzung von bestimmten Tetrachlorbisphosphaten mit bestimmten Alkoholen, Neutralisation des gebildeten Chlorwasserstoffs mit einer Base und Abtrennung des gewünschten Produktes von der Reaktionsmischung durch Extraktion, wie in Anspruch 1 beschrieben.

Tetraalkylbisphosphate sind viskose, niedrigflüchtige Flüssigkeiten und finden seit langer Zeit technische Anwendungen, beispielsweise als Polymeradditive (siehe US 2,782,128) oder als Hydrauliköle (siehe US 4,056,480). Für diese Anwendungen ist es typischer Weise erforderlich, dass die Tetraalkylbisphosphate möglichst wenig Verunreinigungen enthalten. So sollte der Gehalt an sauren Verunreinigungen, wie er beispielsweise durch die Bestimmung der Säurezahl ermittelt werden kann, möglichst niedrig sein, da Säure zu beschleunigter Zersetzung oder Korrosion führen kann. Tetraalkylbisphosphate mit einer Säurezahl von größer als etwa 1,0 mg KOH/g sind für die genannten Anwendungen unbrauchbar. Ähnlich wie Säuren sind auch Verunreinigungen mit Basen unerwünscht, da sie bei der Anwendung in unerwünschter Weise als Katalysatoren fungieren künnen. Weiterhin ist der Gehalt an Elektrolyten unerwünscht, weil er ebenfalls Korrosionsprobleme verursachen kann oder zu Unverträglichkeit zwischen Tetraalkylbisphosphat und einer Polymermatrix führen kann. Gehalte an Metallionen von größer als etwa 5000 ppm, wie sie durch bekannte chromatographische oder spektroskopische Methoden ermittelt werden können, sind unerwünscht.

Verschiedene Verfahren zur Herstellung von Tetraalkylbisphosphaten sind bekannt. Sie weisen jedoch Mängel auf, indem die Vermeidung oder Abtrennung der oben genannten Verunreinigungen aufwändig und umständlich und so für eine großtechnische Produktion ungeeignet sind. Weiterhin liefern die bekannten Verfahren unbefriedigende Ausbeuten, was eine technisch aufwändige Abtrennung und Entsorgung von unverbrauchten Rohstoffen oder von Nebenprodukten erforderlich macht.

US 2,782,128 beschreibt ein Verfahren zur Herstellung von Tetraalkylbisphosphaten durch Umsetzung von Dialkylchlorphosphaten mit Diolen in Gegenwart von Pyridin. Das in der ersten Stufe der Synthesesequenz aus Phoshphortrichlorid, Alkohol und Chlor hergestellte Zwischenprodukt Dialkylchlorphosphat muss mit dem Lösungsmittel Benzol aufgearbeitet und dann im Vakuum destilliert werden. In der zweiten Stufe muss das Nebenprodukt Pyridinhydrochlorid durch Zugabe des Lösungsmittels Diethylether ausgefällt werden. Weiterhin müssen Reste des Pyridins mittels Salzsäure extrahiert werden und die Produktphase dann wieder mit Natronlauge säurefrei und mit Wasser neutral gewaschen werden. Schließlich ist die destillative Entfernuung des Lösungsmittels und von Wasserresten erforderlich. Die Gesamtausbeute über beide Stufen wird mit 74 - 77 % angegeben. Nachteilig an diesem Verfahren ist die Vielzahl der erforderlichen Aufarbeitungsoperationen, die mehrfache Verwendung von Lösungsmitteln sowie die nur mäßige Ausbeute.

Die Publikation "Diphosphate Ester Plasticizers" in Indust. Eng. Chem 1950, Band 42, S. 488, beschreibt ein ähnliches Verfahren wie US 2,782,128 und gibt als Nachteile dieses Verfahrens an, dass die Ausbeute mit nur 50 % sehr niedrig sei und dass erhebliche Schwierigkeiten bei der Reinigung der Zwischenprodukte und des Endproduktes aufgetreten seien. Als Alternative wird ein besseres Verfahren beschrieben, in dem ein Diol in der ersten Stufe mit Phosphoroxychlorid zu einem Tetrachlorbisphosphat umgesetzt wird, welches dann in der zweiten Stufe mit dem Alkohol zum Endprodukt reagiert. Es wird erwähnt, dass die Ausbeuten zufriedenstellend seien, allerdings werden sie nicht angegeben. Zur Aufarbeitung des Reaktionsansatzes der zweiten Stufe wird Pyridin zugegeben, das ausgefallene Pyridinhydrochlorid abgesaugt und die Produktphase dann mit Wasser gewaschen. Schließlich müssen Pyridinreste im Vakuum entfernt werden.

Nachteilig an dieser Vorgehensweise ist zunächst die Schwierigkeit, die Pyridinreste vollständig aus dem Endprodukt zu entfernen. Die Abtrennung des Pyridinhydrochlorids vom Tetraalkylbisphosphat durch Filtration gelingt nur dann zufriedenstellend, wenn sich dieses im Tetraalkylbisphosphat nur wenig löst. Ein weiterer Nachteil ergibt sich aus der Tatsache, dass eine Wäsche der Produktphase mit Wasser durchgeführt wird. Ist das Tetraalkylbisphosphat teilweise mit Wasser mischbar, so sind Ausbeuteverluste bei dieser Operation unvermeidlich. Bei Tetraalkylbisphosphaten, die in jedem Verhältnis mit Wasser mischbar sind, versagt diese Wäsche vollständig, da eine Abtrennung des Produktes vom Abwasser durch Phasentrennung nicht möglich ist.

US 4,056,480 schlägt ein ähnliches Verfahren zur Herstellung von Tetraalkylbisphosphaten vor, bei dem ebenfalls ein Diol in der ersten Stufe mit Phosphoroxychlorid zu einem Tetrachlorbisphosphat umgesetzt wird, das in der zweiten Stufe mit dem Alkohol zum Endprodukt reagiert. Bei der Isolierung des Endprodukts wird anstelle von Pyridin eine verdünnte Natronlauge eingesetzt. Es bildet sich ein Gemisch, aus dem die flüssige Produktphase durch Phasentrennung abgetrennt werden kann. Nachdem aus der Produktphase der Alkoholüberschuss abdestilliert wurde, muss sie ein weiteres Mal mit Wasser gewaschen und schließlich im Vakuum von Wasserresten befreit werden. Die Aubeuten an Tetraalkylbisphosphaten betragen 12 - 74 %. Nachteilig an diesem Verfahren sind wiederum die nur mäßige Ausbeute und der Umstand, dass das Verfahren mehrere Flüssig-flüssig-Phasentrennungen beinhaltet. Damit ist das Verfahren zur Herstellung von teilweise wasserlöslichen Tetraalkylbisphosphaten nur schlecht geeignet und zur Herstellung von vollständig wasserlöslichen Tetraalkylbisphosphaten gänzlich ungeeignet.

Aus der DE-A 26 25 878 ist ein Verfahren zur Kraftübertragung bekannt, wobei die Kraft mittels einer hydraulischen Flüssigkeit, die Bisphosphate einer bestimmten Struktur enthält, übertragen wird. Gemäß Beispiel 2 wird die Herstellung des nicht vollständig wasserlöslichen Tetra-n-butyldiethylenglycolbisphosphats durch Umsetzung von n-Butanol und Diethylenglycolbis(dichlorphosphat) mit 50%iger wäßriger NaOH und unter Zusatz einer größeren Menge Wasser beschrieben.

Es ist Aufgabe der vorliegenden Erfindung, ein Verfahren zur Herstellung von vollständig wasserlöslichen Tetraalkylbisphosphaten zur Verfügung zu stellen, das gegenüber dem Stand der Technik einfacher durchführbar ist und bessere Ausbeuten liefert.

Überraschend wurde gefunden, dass sich vollständig wasserlösliche Tetraalkylbisphosphate leicht und in guter Ausbeute herstellen lassen, wenn der bei der Umsetzung bestimmter Tetrachlorbisphosphate mit bestimmten Alkoholen gebildete Chlorwasserstoff mit einer Base neutralisiert wird und das gewünschte Produkt aus der wässrigen Reaktionsmischung durch Extraktion abgetrennt wird. Die genannte Aufgabe wird also gelöst durch ein Verfahren zur Herstellung von vollständig oder teilweise wasserlöslichen Tetraalkylbisphosphaten dadurch gekennzeichnet, dass man
a) ein Tetrachlorbisphosphat der allgemeinen Formel (I) 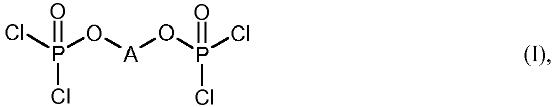 worin A einen Rest bedeutet ausgewählt aus der Gruppe bestehend aus -CH₂CH₂-O-CH₂CH₂-, -CH₂CH₂CH₂CH₂- und -CH₂-CH(CH₂CH₂)₂CH-CH₂- ,
   mit einem oder mehreren Alkoholen ausgewählt aus der Gruppe bestehend aus Methanol und Ethanol
   umsetzt,
b) wenn in Schritt a) mindestens 50 % der im Tetrachlorbisphosphat enthaltenen P-Cl-Gruppen umgesetzt wurden die Reaktionsmischung aus Schritt a) mit einer Base umsetzt, wobei als Base eine 10 - 60 gew.-%ige, wässrige Lösung von Natriumhydroxid, Natriumcarbonat, Kaliumhydroxid und/oder Kaliumcarbonat eingesetzt wird,
c) Wasser zu der Reaktionsmischung aus Schritt b) zugibt,
d) danach ein von dem oder den in Schritt a) eingesetzten Alkoholen unterschiedliches und mit Wasser nicht vollständig mischbares Lösungsmittel zu der Reaktionsmischung aus Schritt c) unter Bildung einer Mischung bestehend aus zwei getrennten, flüssige Phasen zugibt, wobei die Mengen an Wasser in Schritt c) und an Lösungsmittel in Schritt d) so gewählt werden, dass das Volumenverhältnis von wässriger Phase zu organischer Phase zwischen 20 : 1 und 1 : 20 beträgt, und
e) die Phase, die das Tetraalkylbisphosphat enthält, aus der in Schritt d) erhaltenen Mischung abtrennt.

Der Begriff "Tetraalkylbisphosphate" bezeichnet organische Substanzen, die pro Molekül zwei Phosphorsäureestergruppen -O-P(=O)(OR)₂ enthalten, wobei R allgemein für Alkylreste steht und die in einem Molekül enthaltenen Alkylreste R gleich oder verschieden sein können. Der Begriff "vollständig oder teilweise wasserlöslich" bezeichnet im Zusammenhang mit der vorliegenden Erfindung solche Substanzen, deren Löslichkeit in Wasser bei 25 °C größer als etwa 1 Gewichtsprozent beträgt. Der Begriff "Tetrachlorbisphosphate" bezeichnet organische Substanzen, die pro Molekül zwei Phosphorsäureesterdichloridgruppen -O-P(=O)Cl₂ enthalten.

Die im erfindungsgemäßen Verfahren eingesetzten Tetrachlorbisphosphate lassen sich nach bekannten Methoden herstellen, wie sie beispielsweise in Indust. Eng. Chem. 1950, Band 42, S. 488 oder in US 4,056,480 beschrieben sind.

Die im erfindungsgemäßen Verfahren eingesetzten Tetrachlorbisphosphate entsprechen der allgemeinen Formel (I) 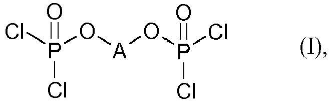 worin
A
ein Rest ist ausgewählt aus der Gruppe bestehend aus -CH₂CH₂-O-CH₂CH₂-, -CH₂CH₂CH₂CH₂- und -CH₂-CH(CH₂CH₂)₂CH-CH₂-.

Die im erfindungsgemäßen Verfahren eingesetzten Alkohole werden ausgewählt aus der Reihe Methanol und Ethanol.Bei den im erfindungsgemäßen Verfahren eingesetzten Basen handelt es sich um Natriumhydroxid, Natriumcarbonat, Kaliumhydroxid und/oder Kaliumcarbonat, das in Form einer 10 - 60 gewichtsprozentigen, wässrigen Lösung eingesetzt wird.Bei der Durchführung des Schrittes a) des erfindungsgemäßen Verfahrens werden mindestens 4 mol-Äquivalente Alkohol pro 1 mol-Äquivalent Tetrachlorbisphosphat eingesetzt. Die Reaktanden können in Substanz oder in einem Lösungsmittel gelöst miteinander umgesetzt werden. Geeignete Lösungsmittel sind Toluol, Heptan und Dichlormethan sowie der in die Reaktion eingesetzte Alkohol im Überschuss. Das Tetrachlorbisphosphat wird in einem Reaktionsgefäß vorgelegt und der Alkohol wird zudosiert. Alternativ legt man den Alkohol in einem Reaktionsgefäß vor und dosiert das Tetrachlorbisphosphat zu. Es ist auch möglich, Alkohol und Tetrachlorbisphosphat parallel in ein Reaktionsgefäß zu dosieren. Anstelle der reinen Reaktanden können auch Lösungen der Reaktanden dosiert werden.

In der dann ablaufenden Umsetzung werden die P-Cl-Gruppen des Tetrachlorbisphosphats durch Reaktion mit dem Alkohol in P-OR-Gruppen überführt und es wird Chlorwasserstoff freigesetzt. Die Umsetzung wird bevorzugt bei Temperaturen zwischen -10 °C und +70 °C und bei Drücken zwischen 10 und 6000 mbar durchgeführt. Dabei werden die Reaktanden durch geeignete Maßnahmen miteinander in Kontakt gebracht, insbesondere durch Rühren.

Bevorzugt wird der in der Reaktion als Nebenprodukt gebildete Chlorwasserstoff im Wesentlichen in der Reaktionsmischung belassen und in Schritt b) des Verfahrens mit der Base neutralisiert. In einer alternativen, ebenfalls bevorzugten Ausführungsform des Verfahrens wird in Schritt a) der als Nebenprodukt gebildete Chlorwasserstoff zumindest teilweise aus dem Reaktionsgefäß ausgeschleust. Dazu wird beispielsweise Vakuum angelegt oder ein inertes Gas wie Stickstoff oder Kohlendioxid durch das Reaktionsgefäß geleitet.

In einer alternativen Ausführungsform kann der Schritt a) weitere, optionale Trennoperationen beinhalten, wie beispielsweise eine Destillation zur Abtrennung von nicht umgesetztem Alkohol.

Der nachfolgende Schritt b) wird erst dann durchgeführt, wenn in Schritt a) mindestens 50 % der im Tetrachlorbisphosphat enthaltenen P-Cl-Gruppen umgesetzt wurden. Der Umsatz der P-Cl-Gruppen kann analytisch verfolgt werden, bevorzugt mittels ³¹P-NMR-Spektroskopie.

Zur Durchführung des Schrittes b) wird die in Schritt a) erhaltene Reaktionsmischung bevorzugt unter Durchmischung in Kontakt mit der Base gebracht. Die Menge der Base wird so gewählt, dass die Reaktionsmischung nach dem Schritt b) bevorzugt einen pH-Wert zwischen 6 und 11 aufweist. Besonders bevorzugt weist die Reaktionsmischung nach dem Schritt b) einen pH-Wert zwischen 7 und 10 auf.

Bevorzugt wird die Base in einer dosierfähigen Form in das Reaktionsgefäß des Schrittes a) eingebracht. Alternativ und ebenfalls bevorzugt wird die Base in geeigneter Form in einem zweiten Reaktionsgefäß vorgelegt und die Reaktionsmischung aus Schritt a) in dieses überführt.

Erfindungsgemäß wird eine 10 - 60 gewichtsprozentige, wässrige Lösung von Natriumhydroxid, Natriumcarbonat, Kaliumhydroxid und/oder Kaliumcarbonat eingesetzt.

Der Schritt b) wird bevorzugt bei Temperaturen zwischen 5 °C und 70 °C und bei Drücken zwischen 10 und 6000 mbar durchgeführt.

Der Schritt b) kann weitere, optionale Trennoperationen beinhalten, bevorzugt eine Destillation zur Abtrennung von nicht umgesetztem Alkohol aus Schritt a).

Im Schritt c) des erfindungsgemäßen Verfahrens wird zu der in Schritt b) erhaltenen Reaktionsmischung Wasser zugesetzt und die erhaltene Mischung in geeigneter Weise durchmischt. Dadurch wird das Salz NaCl und/oder KCl in eine wässrige Lösung überführt und alle Feststoffe werden im Wesentlichen aufgelöst. Die Zugabe von Wasser kann auch in der Weise erfolgen, dass das Wasser bereits in Schritt b) in Form einer wässrigen Lösung oder Dispersion eingebracht wird.

Der Schritt c) wird bevorzugt bei Temperaturen zwischen 5 °C und 70 °C und bei Drücken zwischen 10 und 6000 mbar durchgeführt.

Der Schritt c) kann weitere, optionale Trennoperationen beinhalten, bevorzugt eine Filtration zur Abtrennung von wasserunlöslichen Feststoffen oder eine Destillation zur Abtrennung von nicht umgesetztem Alkohol aus Schritt a).

In Schritt d) wird ein Lösungsmittel zugesetzt, das unterschiedlich von dem oder den in Schritt a) eingesetzten Alkoholen ist und mit Wasser nicht vollständig mischbar ist. Es kann auch eine Kombination von mehreren Lösungsmitteln eingesetzt werden. Bevorzugt werden die Lösungsmittel aus der Reihe der aliphatischen Kohlenwasserstoffe, insbesondere Pentan, Hexan, Cyclohexan, Heptan, der aromatischen Kohlenwasserstoffe, insbesondere Benzol, Toluol, Xylol, der Halogenkohlenwasserstoffe, insbesondere Methylenchlorid, Chloroform, Dichlorethan, Trichlorethylern, Tetrachlorethylen, 1-Chlorbutan, Chlorbenzol, 1,2-Dichlorbenzol, der Alkohole, insbesondere 1-Butanol, 1-Pentanol, 1-Hexanol, Cyclohexanol, der Ether, insbesondere Diethylether, Methyl-tert.butylether, Dibutylether, der, Ketone, insbesondere 2-Butanon, 3-Pentanon, 4-Methyl-2-pentanon, Cyclohexanon oder der Ester, insbesondere Essigsäureethylester, Essigsäure-1-butylester, Essigsäure-1-pentylester ausgewählt.

Die genauen Mengen an Wasser in Schritt c) und an Lösungsmittel in Schritt d) sind für das Erreichen einer Phasentrennung nicht entscheidend. Die erforderlichen Mengen an Wasser und an Lösungsmittel können durch einfache Versuche leicht ermittelt werden. Erfindungsgemäß werden die Mengen an Wasser in Schritt c) und an Lösungsmittel in Schritt d) so gewählt, dass das Volumenverhältnis von wässriger Phase zu organischer Phase zwischen 20 : 1 und 1 : 20 beträgt. Bevorzugt werden die Mengen so gewählt, dass das Volumenverhältnis von wässriger Phase zu organischer Phase zwischen 10 : 1 und 1 : 10 beträgt.

Im Schritt e) des erfindungsgemäßen Verfahrens werden die beiden in Schritt d) erhaltenen Phasen getrennt und die das Tetraalkylbisphosphat enthaltende Phase wird nach an sich bekannten Methoden aufgearbeitet.

Zur Abtrennung der Produktphase werden die an sich bekannten Methoden zur Trennung von Flüssig-flüssig-Mischungen angewendet, bevorzugt das Dekantieren oder das Zentrifugieren. Die abgetrennte Produktphase kann bevorzugt einer weiteren Phasentrennung oder mehreren Phasentrennungen unterworfen werden und wenn erforderlich einer Nachreinigung, bevorzugt durch Filtration, Klärung, Extraktion, Destillation oder Trocknung, oder durch eine geeignete Kombination dieser Methoden, zugeführt werden.

Die Schritte b), c) und d) des erfindungsgemäßen Verfahrens werden in beliebiger Reihenfolge nacheinander oder vollständig oder teilweise gleichzeitig durchgeführt.

Bevorzugt werden die Schritte d) und e) wiederholt nacheinander durchgeführt.

Das erfindungsgemäße Verfahren wird für die Herstellung von vollständig wasserlöslichen Tetraalkylbisphosphaten eingesetzt.

Jeder einzelne der vier Schritte des Verfahrens kann diskontinuierlich oder kontinuierlich durchgeführt werden. Das gesamte Verfahren kann aus beliebigen Kombinationen von diskontinuierlich oder kontinuierlich durchgeführten Schritten bestehen.

Das erfindungsgemäße Verfahren gestattet die Synthese von vollständig wasserlöslichen Tetraalkylbisphosphaten in besserer Ausbeute als nach den bekannten Verfahren und in hoher Reinheit.

Anhand der nachfolgenden Beispiele wird die Erfindung näher erläutert, ohne dass dadurch eine Einschränkung der Erfindung bewirkt werden soll. Die angegebenen Teile beziehen sich auf das Gewicht. Zur Klarstellung sei angemerkt, dass vom Rahmen der vorliegenden Erfindung alle vorstehend aufgeführten, allgemeinen oder in Vorzugsbereichen genannten Definitionen und Parameter in beliebigen Kombinationen umfasst sind.

### Beispiele

### Beispiel 1: Herstellung von Diethylenglycol-bis(dichlorphosphat) (nicht erfindungsgemäß)

In einem 1000-ml-Vierhalskolben mit Rührer, Thermometer, Tropftrichter mit Druckausgleich und Rückflusskühler wurden 984,3 g Phosphorylchlorid bei 20 °C vorgelegt. Dann wurde ein Vakuum von etwa 670 mbar angelegt und innerhalb von 4 h wurden 332,3 g Diethylenglykol zugetropft. Durch Kühlung im Eiswasserbad wurde die Temperatur bei 20 °C gehalten. Es bildete sich eine klare, farblose Reaktionsmischung. Nach beendeter Dosierung wurde der Druck bis auf etwa 6 mbar abgesenkt und 16 h bei 25 °C nachgerührt. Danach verblieben 1055,7 g (98 %) Diethylenglycol-bis(dichlorphosphat).

### Beispiel 2: Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 169,8 g Diethylenglycol-bis(dichlorphosphat) aus Beispiel 1 vorgelegt und auf 10 °C abgekühlt. Bei dieser Temperatur wurden innerhalb von 50 min 350 ml Ethanol zugetropft. Durch Einwerfen von Trockeneispellets wurde die Temperatur bei 10 - 15 °C gehalten. Die farblose Lösung wurde 1 h bei 15 °C und dann 2 h bei 23 °C nachgerührt. Dann wurde in die farblose und klare Syntheselösung innerhalb von 2 h eine Mischung aus 340 ml Wasser und 155 g 50%iger Natronlauge getropft. Die Temperatur wurde durch Kühlung im Eiswasserbad bei 20 °C gehalten. Es wurde 16 h bei 23 °C nachgerührt und dann vier mal mit je 100 ml Dichlormethan extrahiert. Die vereinigten Extraktlösungen wurden am Rotationsverdampfer im Vakuum eingeengt. Schließlich wurde das Produkt über einen Büchner-Trichter filtriert.

| | |
|---|---|
| Ausbeute | 172,2 g (91 %) farblose Flüssigkeit |
| Säurezahl | < 0,1 mg KOH/g |
| Natriumgehalt | 1178 ppm |

### Beispiel 3: Herstellung von Tetraethyldiethylenglycolbisphosphat (erfindungsgemäß)

In einem 1000-ml-Vierhalskolben wurden unter N₂ 169,8 g Diethylenglycol-bis(dichlorphosphat) aus Beispiel 1 bei 5 °C vorgelegt. Bei dieser Temperatur wurden innerhalb von 50 min 276,4 g Ethanol zugetropft. Die Reaktionsmischung zeigte eine exotherme Reaktion. Mittels Eiswasserbad wurde die Temperatur der Reaktionsmischung bei 10 °C gehalten. Die klare, leicht orangebräunliche Lösung wurde 2 h bei 10 °C nachgerührt, dann auf 20 °C erwärmt und weitere 18 h nachgerührt. In einem 2-1-Becherglas wurden 340 ml Voll-entsalztes-Wasser vorgelegt und unter Rühren 155 g 50%ige Natronlauge zugegeben. Die Mischung wurde auf 23 °C abgekühlt. Die obige Syntheselösung wurde nun innerhalb von 2 h eindosiert, dabei leichte Nebelbildung. Die Temperatur wurde mittels Außenkühlung bei 23 °C gehalten. Die am Ende noch saure, gelbliche Mischung war klar und einphasig. Sie wurde mit wenig 20%iger, wässriger Sodalösung auf pH 7,5 gestellt und dann vier mal mit jeweils 100 ml Methylenchlorid ausgeschüttelt. Die leicht gelblichen, trüben organischen Phasen wurden vereinigt und am Rotationsverdampfer im Vakuum eingeengt. Um das Produkt zu klären, wurde es zuletzt noch über einen Rundfilter aus Papier abgesaugt.

| | |
|---|---|
| Ausbeute | 159,3 g (84 %) gelbliche Flüssigkeit |
| Säurezahl | < 0,1 mg KOH/g |
| Natriumgehalt | 1794 ppm |

### Beispiel 4: Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 169,8 g Diethylenglycol-bis(dichlorphosphat) aus Beispiel 1 vorgelegt und auf 10 °C abgekühlt. Bei dieser Temperatur wurden innerhalb von 50 min 350 ml Ethanol zugetropft. Durch Einwerfen von Trockeneispellets wurde die Temperatur bei 10 - 15 °C gehalten. Die farblose Lösung wurde 1 h bei 15 °C und dann 2 h bei 20 °C nachgerührt. Dann wurde in die Syntheselösung innerhalb von 2 h eine Mischung aus 340 ml Wasser und 155 g 50%iger Natronlauge getropft. Die Temperatur wurde durch Kühlung im Eiswasserbad bei 20 °C gehalten. Es wurde 16 h bei 23 °C nachgerührt und dann vier mal mit je 100 ml Toluol extrahiert. Die vereinigten Extraktlösungen wurden am Rotationsverdampfer im Vakuum eingeengt. Schließlich wurde das Produkt über Rundfilter aus Papier abgesaugt.

| | |
|---|---|
| Ausbeute | 169,2 g (89 %) farblose Flüssigkeit |
| Säurezahl | < 0,1 mg KOH/g |
| Natriumgehalt | 1546 ppm |

### Beispiel 5: Herstellung von Tetraethyldiethylenglycolbisphosphat (erfindungsgemäß)

In einem 1000-ml-Vierhalskolben mit Rührer, Thermometer, Tropftrichter mit Druckausgleich und Rückflusskühler wurden unter Stickstoffatmosphäre 350 ml Ethanol vorgelegt und auf 15 °C abgekühlt. Bei dieser Temperatur wurden innerhalb von 35 min 169,8 g Diethylenglycol-bis(dichlorphosphat) aus Beispiel 1 zugetropft. Durch Außenkühlung wurde die Temperatur bei 15 - 20 °C gehalten. Die farblose Lösung wurde 4 h bei 20 °C nachgerührt. Dann wurde die farblose und klare Syntheselösung auf 15 °C abgekühlt und durch Zugabe von 192,1 g 50%iger Natronlauge innerhalb von 40 min auf pH 2 eingestellt. Die Temperatur wurde dabei durch Kühlung im Eiswasserbad bei 20 - 25 °C gehalten. Dann wurden wenige ml 10%ige Natronlauge zugegeben und damit pH 8,5 eingestellt. Die erhaltene Mischung wurde 16 h bei 23 °C gerührt und dann unter Vakuum am Rotationsverdampfer bei 20 mbar und 50 °C eingedampft. Der erhaltene Rückstand wurde mit 400 ml Wasser versetzt, 30 min verrührt und dann drei mal mit je 100 ml Dichlormethan extrahiert. Die vereinigten Extraktlösungen wurden am Rotationsverdampfer im Vakuum eingeengt. Der dabei verbleibende Rückstand wurde filtriert.

| | |
|---|---|
| Ausbeute | 172,9 g (91 %) farblose Flüssigkeit |
| Säurezahl | < 0,1 mg KOH/g |
| Natriumgehalt | 530 ppm |

### Beispiel 6: Herstellung von Tetramethyldiethylenglycolbisphosphat (erfindungsgemäß)

Nach dem in Beispiel 2 angegebenen Verfahren wurde aus 250 ml Methanol und 169,8 g Diethylenglycol-bis(dichlorphosphat) aus Beispiel 1 Tetramethyldiethylenglycolbisphosphat hergestellt.

| | |
|---|---|
| Ausbeute | 145,1 g (90 %) farblose Flüssigkeit |
| Säurezahl | < 0,1 mg KOH/g |
| Natriumgehalt | 1254 ppm |

### Beispiel 7: Herstellung von Tetra-n-butyldiethylenglycolbisphosphat (nicht erfindungsgemäss)

Nach dem in Beispiel 2 angegebenen Verfahren wurde aus 600 ml n-Butanol und 169,8 g Diethylenglycol-bis(dichlorphosphat) aus Beispiel 1 Tetra-n-butyldiethylenglycolbisphosphat hergestellt.

| | |
|---|---|
| Ausbeute | 217,8 g (89 %) farblose Flüssigkeit |
| Säurezahl | < 0,1 mg KOH/g |
| Natriumgehalt | 1935 ppm |

### Beispiel 8: Herstellung von 1,4-Butandiol-bis(dichlorphosphat) (nicht erfindungsgemäß)

In einem 500-ml-Vierhalskolben mit Rührer, Thermometer, Tropftrichter mit Druckausgleich und Rückflusskühler wurden 300,0 g Phosphorylchlorid bei 20 °C vorgelegt. Dann wurde bei einem Vakuum von 200 mbar innerhalb von 45 min 45,0 g 1,4-Butandiol zugetropft. Durch Kühlung im Eiswasserbad wurde die Temperatur bei 20 °C gehalten. Es bildete sich eine klare, farblose Reaktionsmischung. Nach beendeter Dosierung wurde der Druck auf etwa 100 mbar abgesenkt und 2 h nachgerührt. Anschließend wurde eine Destillationsbrücke aufgebaut und der Überschuss an Phosphorylchlorid abdestilliert. Danach verblieben 144,9 g (91 %) 1,4-Butandiol-bis-(dichlorphosphat).

### Beispiel 9: Herstellung von Tetraethyl-1,4-butandiolbisphosphat (erfindungsgemäß)

Nach dem in Beispiel 2 angegebenen Verfahren wurde aus 350 ml Ethanol und 161,8 g 1,4-Butandiol-bis(dichlorphosphat) aus Beispiel 7 Tetraethyl-1,4-butandiolbisphosphat hergestellt.

| | |
|---|---|
| Ausbeute | 160,2 g (88 %) farblose Flüssigkeit |
| Säurezahl | 0,13 mg KOH/g |
| Natriumgehalt | 1085 ppm |

### Beispiel 10: Löslichkeit von Tetraalkylbisphosphaten in Wasser

50,0 g Tetraalkylbisphosphat und 50,0 g voll entsalztes Wasser wurden in einen Scheidetrichter eingewogen, kräftig geschüttelt und dann für 1 h bei einer Umgebungstemperatur von 25 °C stehen gelassen. Wenn sich eine Phasentrennung zeigte, wurde die untere, wässrige Phase sorgfältig abgetrennt und ausgewogen (m_{W}). Die wässrige Phase wurde am Rotationsverdampfer bis zur Gewichtskonstanz im Vakuum eingeengt und der Rückstand wurde ebenfalls ausgewogen (m_{R}). Als Maß für die Löslichkeit in Wasser wurde die Größe m_{R}/m_{W} × 100 % berechnet und in Tabelle 1 aufgelistet.

Bei den Substanzen Tetramethyldiethylenglycolbisphosphat und Tetraethyldiethylenglycolbisphosphat fand im oben beschriebenen Versuch keine Phasentrennung statt. Weitere Versuche mit anderen Gewichtsverhälnissen von Tetraalkylbisphosphat und Wasser ergaben bei diesen Substanzen ebenfalls keine Phasentrennung. Das bedeutet, dass Tetramethyldiethylenglycolbisphosphat und Tetraethyldiethylenglycolbisphosphat vollständig wasserlöslich sind.

**Tabelle 1: Löslichkeit von Tetraalkylbisphosphaten in Wasser**

| **Tetraalkylbisphosphat** | **m_{R}/m_{W} × 100 %** |
|---|---|
| Tetraethyldiethylenglycolbisphosphat (Beispiele 2 - 5) | Keine Phasentrennung |
| Tetramethyldiethylenglycolbisphosphat (Beispiel 6) | Keine Phasentrennung |
| Tetra-n-butyldiethylenglycolbisphosphat (Beispiel 7) | 3 % |
| Tetraethyl-1,4-butandiolbisphosphat Beispiel (9) | 26 % |

### Auswertung

Beispiel 10 zeigt, dass die betrachteten Tetraalkylbisphosphate vollständig oder teilweise mit Wasser mischbar sind. Daher sind diese Substanzen nach den Herstellverfahren aus dem Stand der Technik nur in schlechter Ausbeute oder gar nicht herstellbar. Die Beispiele 2 bis 7 und 9 zeigen, dass Tetraalkylbisphosphate nach dem erfindungsgemäßen Verfahren einfach und in hoher Ausbeute hergestellt werden können. Dabei werden Produkte hoher Reinheit erhalten, wie sich an den niedrigen Säurezahlen und Natriumgehalten ablesen lässt. Überraschend ist, dass die Herstellung gerade bei teilweise oder vollständig wasserlöslichen Tetraalkylbisphosphaten erfolgreich möglich ist.

Voll entsalztes Wasser im Sinne der vorliegenden Erfindung ist gekennzeichnet, indem es eine Leitfähigkeit von 0,1 bis 10 µS (1 S = 1 m²·s⁻²) wobei der Gehalt an gelösten oder ungelösten Metall-ionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

## Patentansprüche

1. Verfahren zur Herstellung von vollständig wasserlöslichen Tetraalkylbisphosphaten **dadurch gekennzeichnet, dass** man
a) ein Tetrachlorbisphosphat der allgemeinen Formel (I) 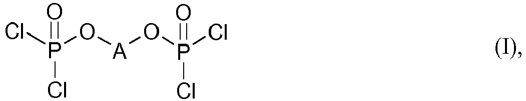 worin
A einen Rest bedeutet ausgewählt aus der Gruppe bestehend aus -CH₂CH₂-O-CH₂CH₂-, -CH₂CH₂CH₂CH₂- und -CH₂-CH(CH₂CH₂)₂CH-CH₂-,
mit einem oder mehreren Alkoholen ausgewählt aus der Gruppe bestehend aus Methanol und Ethanol umsetzt,
b) wenn in Schritt a) mindestens 50 % der im Tetrachlorbisphosphat enthaltenen P-Cl-Gruppen umgesetzt wurden, die Reaktionsmischung aus Schritt a) mit einer Base umsetzt, wobei als Base eine 10 - 60 gew.-%ige, wässrige Lösung von Natriumhydroxid, Natriumcarbonat, Kaliumhydroxid und/oder Kaliumcarbonat eingesetzt wird,
c) Wasser zu der Reaktionsmischung aus Schritt b) zugibt,
d) danach ein von dem oder den in Schritt a) eingesetzten Alkoholen unterschiedliches und mit Wasser nicht vollständig mischbares Lösungsmittel zu der Reaktionsmischung aus Schritt c) unter Bildung einer Mischung bestehend aus zwei getrennten, flüssige Phasen zugibt, wobei die Mengen an Wasser in Schritt c) und an Lösungsmittel in Schritt d) so gewählt werden, dass das Volumenverhältnis von wässriger Phase zu organischer Phase zwischen 20 : 1 und 1 : 20 beträgt, und
e) die Phase, die das Tetraalkylbisphosphat enthält, aus der in Schritt d) erhaltenen Mischung abtrennt.

2. Verfahren nach Anspruch 1, **dadurch gekennzeichnet, dass** die Menge der Base so gewählt wird, dass die Reaktionsmischung nach dem Schritt b) einen pH-Wert zwischen 6 und 11 aufweist.

3. Verfahren nach Anspruch 1, **dadurch gekennzeichnet, dass** ein oder mehrere Lösungsmittel aus der Reihe der aliphatischen Kohlenwasserstoffe, der aromatischen Kohlenwasserstoffe, der Halogenkohlenwasserstoffe, der Alkohole, der Ether, der Ketone oder der Ester verwendet. wird.

4. Verfahren nach Anspruch 1, **dadurch gekennzeichnet, dass** die Schritte b), c) und d) in beliebiger Reihenfolge nacheinander durchgeführt werden.

5. Verfahren nach Anspruch 1, **dadurch gekennzeichnet, dass** die Schritte b), c) und d) vollständig oder teilweise gleichzeitig durchgeführt werden.

6. Verfahren nach Anspruch 1, **dadurch gekennzeichnet, dass** die Schritte d) und e) wiederholt nacheinander durchgeführt werden.

7. Verfahren nach Anspruch 1, **dadurch gekennzeichnet, dass** mindestens einer der Schritte a) bis e) diskontinuierlich durchgeführt wird.

8. Verfahren nach Anspruch 1, **dadurch gekennzeichnet, dass** mindestens einer der Schritte a) bis e) kontinuierlich durchgeführt wird.

## Claims

1. Process for preparing fully water-soluble tetraalkyl bisphosphates, **characterized in that**
a) a tetrachlorobisphosphate of the general formula (I) 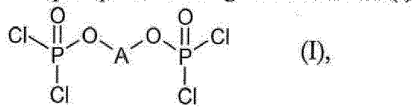 in which
A is a radical selected from the group consisting of -CH₂CH₂-O-CH₂CH₂-, -CH₂CH₂CH₂CH₂- and -CH₂-CH(CH₂CH₂)₂CH-CH₂-,
is reacted with one or more alcohols selected from the group consisting of methanol and ethanol,
b) when in step a) at least 50% of the P-Cl groups present in the tetrachlorobisphosphate have reacted, the reaction mixture from step a) is reacted with a base, wherein use is made as base of a 10%-60% strength by weight aqueous solution of sodium hydroxide, sodium carbonate, potassium hydroxide and/or potassium carbonate,
c) water is added to the reaction mixture from step b),
d) thereafter a solvent which is different from the alcohol or alcohols used in step a) and is not fully miscible with water is added to the reaction mixture from step c), to form a mixture consisting of two separate, liquid phases, wherein the amounts of water in step c) and of solvent in step d) are selected such that the volume ratio of aqueous phase to organic phase is between 20:1 and 1:20, and
e) the phase comprising the tetraalkyl bisphosphate is isolated from the mixture obtained in step d).

2. Process according to Claim 1, **characterized in that** the amount of the base is selected such that the reaction mixture after step b) has a pH between 6 and 11.

3. Process according to Claim 1, **characterized in that** one or more solvents are used from the group consisting of aliphatic hydrocarbons, aromatic hydrocarbons, halohydrocarbons, alcohols, ethers, ketones and esters.

4. Process according to Claim 1, **characterized in that** steps b), c) and d) are carried out in succession in any order.

5. Process according to Claim 1, **characterized in that** steps b), c) and d) are carried out fully or partly simultaneously.

6. Process according to Claim 1, **characterized in that** steps d) and e) are carried out repeatedly in succession.

7. Process according to Claim 1, **characterized in that** at least one of steps a) to e) is carried out discontinuously.

8. Process according to Claim 1, **characterized in that** at least one of steps a) to e) is carried out continuously.

## Revendications

1. Procédé pour la préparation de tétraalkylbisphosphates totalement solubles dans l'eau, **caractérisé en ce que**
a) on fait réagir un tétrachlorobisphosphate de formule générale (I) 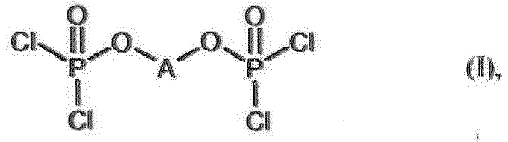 dans laquelle
A représente un radical choisi dans le groupe constitué par -CH₂CH₂-O-CH₂CH₂-, -CH₂CH₂CH₂CH₂- et -CH₂-CH(CH₂CH₂)₂CH-CH₂-,
avec un ou plusieurs alcools choisis dans le groupe constitué par le méthanol et l'éthanol,
b) si dans l'étape a) au moins 50 % des groupes P-Cl contenus dans le tétrachlorobisphosphate ont réagi, on fait réagir avec une base le mélange réactionnel provenant de l'étape a), en utilisant comme base une solution aqueuse à 10 - 60% en poids d'hydroxyde de sodium, de carbonate de sodium, d'hydroxyde de potassium et/ou de carbonate de potassium,
c) on ajoute de l'eau au mélange réactionnel provenant de l'étape b),
d) ensuite on ajoute au mélange réactionnel provenant de l'étape c) un solvant non totalement miscible à l'eau et différent de l'alcool ou des alcools utilisé(s) dans l'étape a), avec formation d'un mélange consistant en deux phases liquides distinctes, en choisissant les quantités d'eau dans l'étape c) et de solvant dans l'étape d) de manière que le rapport volumique de la phase aqueuse à la phase organique soit compris entre 20:1 et 1:20, et
e) non sépare du mélange obtenu dans l'étape d) la phase qui contient le tétraalkylbisphosphate.

2. Procédé selon la revendication 1, **caractérisé en ce que** la quantité de la base est choisie de manière que le mélange réactionnel présente après l'étape b) un pH compris entre 6 et 11.

3. Procédé selon la revendication 1, **caractérisé en ce qu'**on utilise un ou plusieurs solvants choisis dans la série des hydrocarbures aliphatiques, des hydrocarbures aromatiques, des hydrocarbures halogénés, des alcools, des éthers, des cétones ou des esters.

4. Procédé selon la revendication 1, **caractérisé en ce que** les étapes b), c) et d) sont effectuées successivement en un ordre quelconque.

5. Procédé selon la revendication 1, **caractérisé en ce que** les étapes b), c) et d) sont en partie ou en totalité effectuées simultanément.

6. Procédé selon la revendication 1, **caractérisé en ce que** les étapes d) et e) sont effectués successivement de façon répétée.

7. Procédé selon la revendication 1, **caractérisé en ce qu'**au moins l'une des étapes a) à e) est effectuée en mode discontinu.

8. Procédé selon la revendication 1, **caractérisé en ce qu'**au moins l'une des étapes a) à e) est effectuée en continu.
